# EUROPEAN PATENT APPLICATION

(11) **EP 1 894 788 A1**
(43) Date of publication of application: **05.03.2008**
(21) Application number: 07075716.6
(22) Date of filing: 23.08.2007
(51) Int. Cl.: B60R 11/02

(54) **Device for attaching an electronic device to a support**

(30) Priority: 30.08.2006 NL 1032386
(71) Applicant: Vogel's Holding B.V., 5628 DB Eindhoven (NL)
(72) Inventor: Luijben, Stefan Arthur, 5707 RZ Helmond (NL); Grolle, Paul Robbert, 5708 AB Helmond (NL)
(74) Representative: Dorna, Peter

(57) **Abstract**

A device for attaching an electronic device to a support comprises a holder in which the electronic device can be detachably mounted as well as means for attaching the holder to the support. The holder at least comprises two spaced-apart elements and a clamping device. The clamping device is movable from a first position, in which the electronic device can be positioned between the elements, and a second position, in which the electronic device abuts against one of said elements under spring force, and vice versa.

## Description

The invention relates to a device for attaching an electronic device to a support, said device comprising a holder in which the electronic device can be detachably mounted as well as means for attaching the holder to the support.

With such a device, which is known from US patent application US-A1-2005/0067451, an electronic device, for example a DVD player, is detachably mounted in a holder made to measure for the DVD player, which holder is secured to a backrest portion of a vehicle seat by means of straps. A person seated on a back seat in the vehicle can then operate the DVD player and view the screen of the DVD player.

A drawback of the known device is the fact that the holder needs to be adapted to the size of the DVD player or the screen of the DVD player in order to prevent the DVD player from moving with respect to the holder.

This means that a separate holder must be produced for every type of DVD player or screen of a DVD player.

The object of the invention is to provide a device which is suitable for attaching electronic devices of varying dimensions to a support, with the electronic device being securely positioned in the holder.

This object is accomplished with the device according to the invention in that the holder at least comprises two spaced-apart elements and a clamping device, which clamping device is movable from a first position, in which the electronic device can be positioned between the elements, and a second position, in which the electronic device abuts against one of said elements under spring force, and vice versa.

Said spaced-apart elements make it possible to place electronic devices of varying dimensions between the elements. The electronic device is then pressed against one of the elements by moving the clamping device from the first position to the second position, thereby securely connecting the electronic device to the holder.

One embodiment of the device according to the invention is characterised in that a first element comprises a support plate, whilst the second element comprises hook-shaped elements connected to said support plate.

An electronic device, such as a screen of a DVD player, can be easily positioned between a support plate and hook-shaped elements connected to said support plate, whilst both the screen and buttons present on the screen are within easy reach of a user.

Another embodiment of the device according to the invention is characterised in that the clamping device is connected to the support plate, with the clamping device being movable under spring force in a direction towards the hook-shaped elements.

Such a clamping device can be connected to the support plate in a comparatively simple manner.

Yet another embodiment of the device according to the invention is characterised in that the hook-shaped elements are pivotally connected, about a pivot axis extending substantially parallel to the support plate, to the support plate.

If in the event of a collision, with no electronic device present in the holder, a person comes into contact with the hook-shaped elements, said hook-shaped elements will be pivoted about the pivot axis, so that the hook-shaped elements cannot injure said person.

Yet another embodiment of the device according to the invention is characterised in that the hook-shaped elements are adjustably connected to the support plate.

In this way the hook-shaped elements can be easily adapted to accommodate electronic devices of varying dimensions.

Another embodiment of the device according to the invention is characterised in that the clamping device is pivotally connected, about a pivot axis that extends parallel to the support plate, to the support plate against spring force.

Such a clamping device is easy to operate, whilst in addition the fact that the clamping device is pivotable about the pivot axis enables a relatively large movement of the clamping device from the first position to the second position.

Yet another embodiment of the device according to the invention is characterised in that a first end of a coil spring is connected to the support plate at a position spaced from the pivot axis, whilst a second end of said coil spring is connected to the clamping device, said coil spring being tiltable with respect to the support plate, about a tilt axis extending parallel to the support plate, from a first position, in which the clamping device is in the first position thereof, to a second position, in which the clamping device is in the second position thereof.

Because of the provision of such a coil spring, the clamping device will be readily movable under spring force, from the first position to the second position and vice versa.

Yet another embodiment of the device according to the invention is characterised in that the means for attaching the holder to the support are pivotally connected about a pivot axis to the holder.

In this way the holder is readily adjustable with respect to the support.

The invention will now be explained in more detail with reference to the drawings, in which:
Figure 1 is a front view of a device according to the invention;
Figure 2 is a side view of the device shown in figure 1, with the clamping device in a first position thereof;
Figure 3 shows the device of figure 2, with the clamping device in the second position thereof;
Figure 4 shows a detail IV of the device of figure 2;
Figure 5 shows a detail V of the device of figure 3.

Like parts are indicated by the same numerals in the figures.

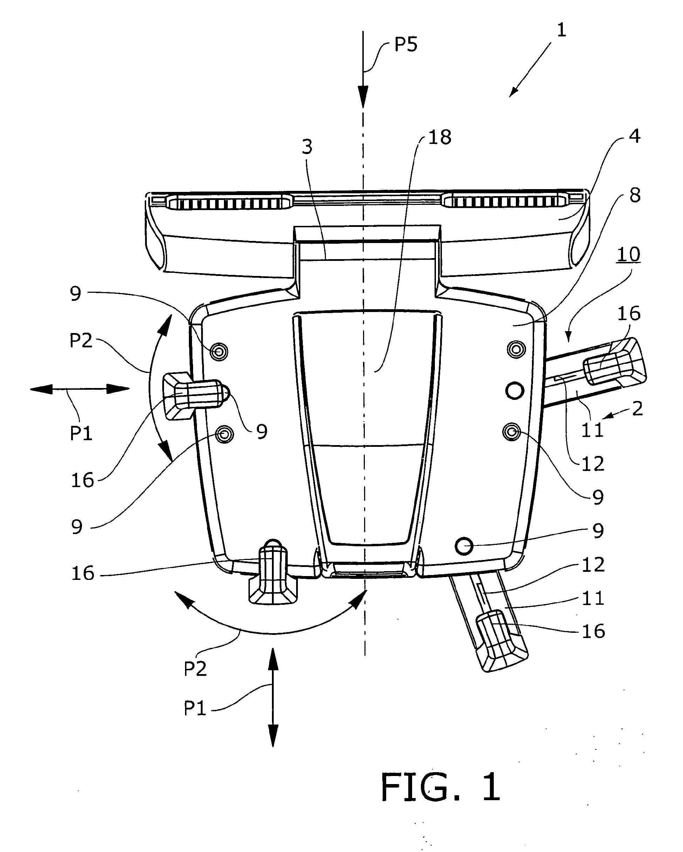

Figures 1-5 show a device 1 according to the invention, which comprises a holder 2 and means 4 pivotally connected, about a pivot axis 3, to the holder 2 for attaching the holder 2 to supports 5 of a headrest 6 of a vehicle seat 7. Preferably, the holder 2 can be fixed in a desired position with respect to the means 4. The means 4 preferably comprise brackets that can be fixedly connected to the supports 5.

The holder 2 comprises a support plate 8, which is provided with a number of mounting holes 9. Attached to the support plate 8 are four hook-shaped elements 10, each hook-shaped element 10 comprising an elongated strip 11, an elongated slot 12 provided therein, a strip 14 which is pivotally connected, about a pivot axis 13, to the elongated strip 11, a spacer 15 extending transversely to the strip 14 and a hook 16 extending transversely to the spacer 15. Each hook-shaped element 10 is mounted to the support plate 8 by means of a bolt extending through the hole 9 and the slot 12 and a nut attached to the bolt. Each hook-shaped element 10 is movable through the slot 12 in the strip 11 in the direction indicated by the arrow P1 and in the opposite direction with respect to the support plate 8 and pivotable in the direction indicated by the arrow P2 and in the opposite direction with respect to the hole 9. In this way the hook-shaped elements 10 can be adjusted and adapted to the dimensions of various electronic devices, such as a screen of a DVD player that is to be supported by the holder 2. The hooks 16, together with the spacer 15 and the strip 14, are pivotable with respect to the support plate 8 and the strip 11 connected to the support plate 8 in the direction indicated by the arrow P3 and in the opposite direction. Such pivoting in a direction away from the support plate 8 by the hooks 16 will for example take place in the event of a collision, when a person seated on a rear seat of a vehicle is moved in the direction of the device 1 and bumps against the hooks 16. Since the hooks 16 will swing aside, the hooks 16 will not cause injury to said person.

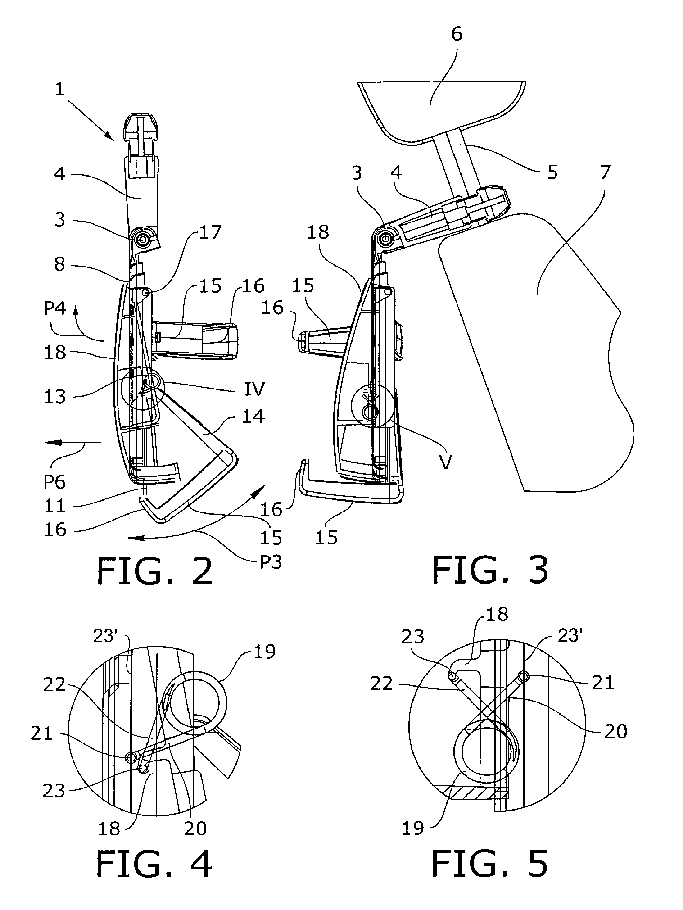

The support plate 8 further comprises a clamping plate 18 forming a clamping device, which is pivotally connected about a pivot axis 17 to the support plate 8. The clamping plate 18 is pivotable in the direction indicated by the arrow P4 and in the opposite direction from a first position shown in figure 2 to a second position shown in figure 3. Disposed between the support plate 8 and the clamping plate 18 is a coil spring 19, which is tiltably connected about a tilt axis 21 to the support plate 8 with a first end 20 and which is tiltably connected about a tilt axis 23 to the clamping plate 18 with a second end 22. In the first position of the clamping plate 18 as shown in figure 2, the coil spring 19 is in the first position shown in figure 4, in which the tilt axis 23 is located on the right-hand side of a neutral line 23' extending through the pivot axis 17 and the tilt axis 21, whilst in the second position of the clamping plate 18 as shown in figure 3, the coil spring 19 is in the position shown in figure 5, in which the tilt axis 23 is located on the left-hand side of the neutral line 23'.

In both positions of the coil spring 19, the clamping plate 18 is retained in the first and the second position thereof by the spring force of the coil spring 19.

The operation of the device 1 is as follows. A user will adjust the hook-shaped elements 10 in dependence on the dimensions of the electronic device to be supported by the device 1. It is for example possible to support a DVD player having a width of, for example, 190 - 270 mm and a thickness of 17 - 32 by means of the device 1. The electronic device is inserted into the device 1 in the direction indicated by the arrow P5, with the electronic device being supported by a hook-shaped element 10 on either side and by two hook-shaped elements 10 at the bottom side, whilst the front side abuts against the hooks 16 and the rear side abuts against the support plate 8. A user will then take hold of the clamping plate 18 from a bottom side of the device 1 and pull it in the direction indicated by the arrow P6 against the spring force of the coil spring 19. This causes the tilt axis 23 to shift relative to the tilt axis 21. Once the tilt axis 23 passes the neutral line 23', the clamping plate 18 is moved further in the direction indicated by the arrow P6 under the influence of the spring force of the coil spring 19, with the clamping plate 18 pressing the electronic device towards the hooks 16, into abutment therewith. The electronic device is now securely positioned between the clamping plate 18 and the hooks 16. If a user wishes to remove the electronic device from the device 1, he or she will push the electronic device, and with it the clamping plate 18, in the opposite direction of the arrow P6. Once the tilt axis 23 connected to the clamping plate 18 passes the neutral line 23' from the position shown in figure 5, the coil spring 19 and thus the clamping plate 18 will move from the position shown in figure 5 and the position shown in figure 4.

It is also possible to use different types of springs for moving the clamping plate 18 in the direction of the hooks 16, thereby causing the clamping plate 18 to press the electronic device firmly against the hooks 16.

It is also possible to integrate the clamping device and one of the opposed elements with each other, in which case the elements are moved towards each other for clamping the electronic device to be supported therebetween.

The hook-shaped elements may also be fixedly connected to the support plate.

Instead of using hook-shaped elements or a support plate, it is also possible to use other elements such as brackets, strips, straps, etc, between which the electronic device can be positioned.

## Claims

1. A device for attaching an electronic device to a support, said device comprising a holder in which the electronic device can be detachably mounted as well as means for attaching the holder to the support, **characterised in that** the holder at least comprises two spaced-apart elements and a clamping device, which clamping device is movable from a first position, in which the electronic device can be positioned between the elements, and a second position, in which the electronic device abuts against one of said elements under spring force, and vice versa.

2. A device according to claim 1, **characterised in that** a first element comprises a support plate, whilst the second element comprises hook-shaped elements connected to said support plate.

3. A device according to claim 2, **characterised in that** the clamping device is connected to the support plate, with the clamping device being movable under spring force in a direction towards the hook-shaped elements.

4. A device according to claim 2 or 3, **characterised in that** the hook-shaped elements are pivotally connected, about a pivot axis extending substantially parallel to the support plate, to the support plate.

5. A device according to any one of the preceding claims 2-4, **characterised in that** the hook-shaped elements are adjustably connected to the support plate.

6. A device according to any one of the preceding claims 2-5, **characterised in that** the clamping device is pivotally connected, about a pivot axis that extends parallel to the support plate, to the support plate against spring force.

7. A device according to claim 6, **characterised in that** a first end of a coil spring is connected to the support plate at a position spaced from the pivot axis, whilst a second end of said coil spring is connected to the clamping device, said coil spring being tiltable with respect to the support plate, about a tilt axis extending parallel to the support plate, from a first position, in which the clamping device is in the first position thereof, to a second position, in which the clamping device is in the second position thereof.

8. A device according to any one of the preceding claims, **characterised in that** the means for attaching the holder to the support are pivotally connected about a pivot axis to the holder.

9. A device according to any one of the preceding claims, **characterised in that** said support is a seat mounted in a vehicle, wherein the device can be detachably attached to a rear side of said seat.
